# EUROPÄISCHE PATENTSCHRIFT

(11) **EP 2 423 088 B1**
(45) Veröffentlichungstag und Bekanntmachung des Hinweises auf die Patenterteilung: **25.06.2014**
(21) Anmeldenummer: 11178302.3
(22) Anmeldetag: 22.08.2011
(51) Int. Cl.: B62K 21/12, B62K 21/26

(54) **Fahrradgriff**
Bicycle handlebar grip
Poignée de vélo

(30) Priorität: 30.08.2010 DE 202010011985 U
(43) Veröffentlichungstag der Anmeldung: 29.02.2012
(73) Patentinhaber: RTI Sports Vertrieb von Sportartikeln GmbH, 56070 Koblenz (DE)
(72) Erfinder: Arnold, Franc, 56068 Koblenz (DE)
(74) Vertreter: Von Kreisler Selting Werner - Partnerschaft von Patentanwälten und Rechtsanwälten mbB

(56) Entgegenhaltungen:
- WO-A1-2004/048187
- DE-U1- 9 112 567
- DE-U1- 20 303 932

## Beschreibung

Die Erfindung betrifft einen Fahrradgriff insbesondere einen Fahrradgriff für Trekkingräder oder Mountainbikes.

Aus EP 1 537 014 ist ein Fahrradgriff bekannt, der ein im Wesentlichen zylindrisch ausgebildetes Hauptgreifelement aufweist, das zur Montage auf den Fahrradlenker gesteckt wird und an dem Fahrradlenker mit einem Klemmelement befestigt wird. Das Hauptgreifelement ist mit einem flügelförmigen Ansatz verbunden, der in Richtung des Fahrradfahrers bzw. entgegen der Fahrtrichtung weist. Der flügelförmige Ansatz bildet an seiner Oberseite eine Handballen-Auflagefläche. Auf dem flügelförmigen Ansatz erfolgt ein Abstützen des Handballens. Hierdurch ist eine Entlastung der Handgelenke gewährleistet. Dies hat den Vorteil, dass die Entlastung der Handgelenke bei insbesondere unebenen Untergrund verringert ist und hierdurch auch ein Einschlafen der Hände insbesondere der Finger vermieden ist. Dies ist insbesondere gewährleistet, wenn das Hauptgreifelement derart auf den Lenker montiert ist, dass die Handballen-Auflagefläche im Wesentlichen horizontal ausgerichtet ist. Gegebenenfalls kann die Handballen-Auflagefläche geringfügig nach unten in Richtung das Fahrradfahrers fallend angeordnet sein. Die Neigung der Handballen-Auflagefläche gegenüber der Horizontalen beträgt allerdings idealerweise nicht mehr als 10° bis 20°.

Zusätzlich weist der in EP 1 537 014 beschriebene Fahrradgriff ein Haltehorn bzw. Barend auf. Das Haltehorn ist mit dem Ende des Lenkerrohrs befestigt und zeigt im Wesentlichen in Fahrtrichtung. Durch das Haltehorn ist eine zweite Greifposition möglich, in der das Handgelenk entlastet werden kann. Das Haltehorn ist unabhängig von dem Hauptgreifelement sowie dem mit dem Hauptgreifelement verbundenen Ansatz. Hierdurch ist es möglich, die Winkellage des Haltehorns unabhängig von der Ausrichtung der Handballen-Auflagefläche auszurichten. Aufgrund der Ausgestaltung des Haltehorns sowie des Hauptgreifelements als gesondertes Bauteil durch die das Einstellen des Haltehorns realisiert ist, ist die Herstellung jedoch kostenintensiver. Ferner ist das Gewicht eines derartigen Fahrradgriffs vergleichsweise hoch.

Aus DE-U-203 03 932 ist ein einstückig ausgebildeter Fahrradgriff bekannt, der an einem Ende ein stielartiges Haltehorn aufweist und diesem gegenüber einen Ansatz, der ein bequemes Greifen gewährleistet. Der Fahrradgriff besteht aus einem harten Trägerelement, das von einem weicheren Material überzogen ist. Über ein Klemmmittel wird der Fahrradgriff am Lenkerrohr befestigt.

Aufgabe der Erfindung ist es einen Fahrradgriff zu schaffen, der kostengünstiger herstellbar ist und eine Handballen-Auflagefläche sowie ein Haltehorn aufweist, die in einem solchen Winkel zueinander stehen, dass eine angenehme und ergonomische Handstellung gewährleistet ist.

Die Lösung der Aufgabe erfolgt durch einen Fahrradgriff gemäß Anspruch 1.

Untersuchungen haben gezeigt, dass bei dem montierten Fahrradgriff mit einem eine Handballen-Auflagefläche ausbildenden Ansatz die Handballen-Auflagefläche im Wesentlichen horizontal ausgerichtet sein soll, um eine ergonomische Handgelenkstellung zu gewährleisten. Ferner haben die Untersuchungen ergeben, dass eine Vielzahl von Fahrradfahrern in montiertem Zustand ein leicht steigendes Haltehorn als angenehm empfinden und ferner ergonomisch ist.

Erfindungsgemäß weist der Fahrradgriff, der insbesondere für Trekkingräder und Mountainbikes geeignet ist, ein auf ein Lenkerrohr aufsteckbares Hauptgreifelement auf. Mit dem Hauptgreifelement ist ein flügelförmiger Ansatz verbunden, der insbesondere einstückig mit dem Hauptgreifelement ausgebildet ist. Im montierten Zustand weist der Ansatz in Richtung des Fahrradfahrers bzw. entgegen der Fahrtrichtung und weist eine Handballen-Auflagefläche auf. Ferner ist ein Haltehorn vorgesehen. Dieses ist erfindungsgemäß einstückig mit dem Hauptgreifelement ausgebildet. Dabei ist die Stellung des Haltehorns derart vorgegeben, dass eine Mittellinie des Haltehorns zu der Handballen-Auflagefläche einen Winkel von 160° bis 120° aufweist. Im montierten Zustand ist das Haltehorn somit vorzugsweise leicht steigend angeordnet, wenn die Handballen-Auflagefläche im montierten Zustand im Wesentlichen horizontal ausgerichtet ist. Da die Untersuchungen ergeben haben, dass eine Einstellbarkeit des Winkels des Haltehorns nicht unbedingt erforderlich ist, sondern eine große Anzahl von Fahrradfahrern das Haltehorn nicht verstellt und ferner ein leicht steigendes Haltehorn im Allgemeinen als positiv empfunden wird, kann durch die erfindungsgemäße einstückige Ausgestaltung des Haltehorns mit dem Hauptgreifelement ein einfacher und kostengünstiger Fahrradgriff realisiert werden. Aufgrund der Einstückigkeit ist die Herstellung einfacher und kostengünstiger. Insbesondere ist es erfindungsgemäß nicht mehr erforderlich, ein gesondertes Haltehorn vorzusehen, dessen Winkel einstellbar ist. Ein besonderer Vorteil der erfindungsgemäß einstückigen Ausgestaltung besteht darin, dass eine Fehleinstellung, die sogar zur Fehlstellung des Handgelenks führen kann, vermieden ist. Vom Benutzer muss lediglich darauf geachtet werden, dass die Handballen-Auflagefläche im Wesentlichen horizontal angeordnet wird. Die Lage des Haltehorns ist somit automatisch definiert.

In einem Übergangsbereich zwischen Hauptgreifelement und Haltehorn ist ein Klemmelement angeordnet. Ferner ist ein sich von einer Außenseite des Haltehorns nach innen erstreckender Klemmschlitz vorgesehen.

Vorzugsweise liegt der Winkel zwischen der Mittellinie des Haltehorns und der Handballen-Auflagefläche im Bereich von 160° bis 140°.

In besonders bevorzugter Ausführungsform ist nicht nur das Hauptgreifelement und das Haltehorn, sondern auch der Ansatz einstückig ausgebildet. Hierbei handelt es sich insbesondere um ein Spritzgussteil, das ggf. aus einem Verbundwerkstoff hergestellt ist. Die Übergänge zwischen dem Hauptgreifelement, dem Ansatz und dem Haltehorn sind in besonders bevorzugter Ausführungsform stufenfrei ausgebildet. Dies hat den Vorteil, dass in jeder Greifposition, insbesondere in den Greifpositionen, in denen das Hauptgreifelement oder das Haltehorn gegriffen wird, keine störenden Stufen vorhanden sind, die zu Druckstellen o.dgl. führen könnten.

Das Hauptgreifelement weist vorzugsweise eine innenliegende insbesondere zylindrische Hülse aus hartem Material auf. Diese ist von einem Überzug aus weicherem Material umgeben, insbesondere umspritzt. Der Überzug kann Bereiche unterschiedlicher Härte aufweisen. Hierdurch kann die Ergonomie weiter verbessert werden, indem beispielsweise insbesondere in Bereichen, in denen hohe Druckbelastungen auftreten, weicheres Material verwendet wird.

Auch der Ansatz weist vorzugsweise ein innenliegendes skelettartiges Trägerelement auf, das vorzugsweise mit der Hülse verbunden, insbesondere einstückig ausgebildet ist. Hierdurch kann eine Versteifung des Ansatzes realisiert werden, um bei höheren Belastungen ein Wegknicken des Ansatzes zu vermeiden. Ferner hat das Vorsehen eines derartigen skelettartigen innenliegenden Trägerelements den Vorteil, dass die äußere Schicht des Ansatzes entsprechend eines Überzuges aus weicherem Material hergestellt sein kann. Ferner ist es möglich, auch das Haltehorn mit einem skelettartigen Trägerelement vorzusehen, das dann wiederum mit einem weicherem Material überzogen ist. Auch dieses skelettartige innenliegende Trägerelement ist vorzugsweise einstückig mit der Hülse ausgebildet oder zumindest mit der Hülse fest verbunden.

Sämtliche Elemente des Fahrradgriffs, ggf. mit Ausnahme einer vorgesehenen Klemmung, sind aus Kunststoffmaterialien hergestellt.

Ein Befestigen des erfindungsgemäßen Fahrradgriffs am Lenkerhorn erfolgt mit Hilfe eines Klemmelements wie einer Schelle. Diese wirkt insbesondere auf die innenliegende Hülse ein, wobei die Hülse in diesem Fall vorzugsweise geschlitzt ist, um ein sicheres Klemmen der Hülse auf dem Lenkerrohr zu gewährleisten.

Ferner ist bei einer besonderen Ausführungsform der Erfindung ein Klemmelement unmittelbar in den Übergangsbereich zwischen Hauptgreifelement und Haltehorn integriert. Insbesondere kann ein innenliegendes schellenartiges Klemmelement vorgesehen sein, wobei zur Klemmung eine Schraube vorgesehen ist, die von außen insbesondere von der Unterseite des Griffs zugängig ist. Besonders bevorzugt ist es, anstelle eines gesonderten schellenartigen Klemmelements, bei dem es sich um ein zusätzliches, insbesondere aus Metall hergestelltes, Bauteil handelt, lediglich eine Mutter vorzusehen, die insbesondere in den Fahrradgriff eingebettet ist. Die Klemmung erfolgt sodann mit Hilfe einer Klemmschraube, die durch eine Öffnung im Fahrradgriff eingeführt wird und in die Mutter eingereift. Durch Anziehen der Klemmschraube erfolgt ein Zusammenziehen des Fahrradgriffs in diesem Bereich. Durch eine entsprechende Verringerung des Durchmessers kann hierdurch eine klemmende Befestigung am Lenker erzielt werden. Vorzugsweise ist hierzu in dem Fahrradgriff ein Klemmschlitz bzw. ein entsprechend ausgebildeter Hohlraum vorgesehen. Hierbei ragt die Klemmschraube durch den Klemmschlitz, wobei der Kopf der Klemmschraube auf der einen Seite des Klemmschlitzes an einer Anlagefläche anliegt und die Mutter auf der anderen Seite des Klemmschlitzes fixiert ist. Die Mutter ist insbesondere durch Umspritzen in den Fahrradgriff integriert. Besonders bevorzugt ist es hierbei, dass die Mutter durch den härteren Kunststoff, der auch ein Skelett des Haltehorns bildet, umspritzt ist. Besonders bevorzugt ist es, dass durch denselben Kunststoff ein, insbesondere einstückig mit dem Skelett des Haltehorns verbundenes, Skelett des Hauptgreifelements ausgebildet ist. Dieses kann insbesondere auch eine auf den Lenker aufzusteckende Hülse aufweisen. Die Form des Kunststoffs, mit dem die Mutter umspritzt ist, ist hierbei vorzugsweise derart ausgewählt, dass der Klemmschlitz ebenfalls vollständig innerhalb dieses härteren Kunststoffteils ausgebildet bzw. vollständig von härterem Kunststoffmaterial umgeben ist. Bei einer weiteren bevorzugten Weiterbildung ist eine Anlagefläche an der ein Kopf des Klemmmittels anliegt, ebenfalls durch das aus härterem Kunststoff hergestellten und die Mutter aufnehmenden Teil ausgebildet. Insbesondere ist die Mutter sowie auch die Öffnung für die Klemmschraube in einem Übergangsbereich zwischen dem Hauptgreifelement und dem Haltehorn angeordnet. Anstelle des Vorsehens einer Mutter und einer Klemmschraube als Klemmmittel, können auch entsprechend ausgebildete Rastelemente vorgesehen sein.

Der Klemmschlitz ist derart ausgebildet und angeordnet, dass er sich von einer Außenseite des Haltehorns nach innen erstreckt. Vorzugsweise handelt es sich bei der Außenseite um die Seite des Haltehorns, die bei montiertem Fahrradgriff nach außen weist. Der Klemmschlitz erstreckt sich hierbei in Seitenansicht vorzugsweise in Längsrichtung des Haltehorns. Bevorzugt ist es hierbei, dass das untere bzw. innere Ende des Klemmschlitzes in einem Bereich knapp innerhalb des Lenkerrohres beginnt bzw. in den Bereich des Lenkerrohres hineinragt. Ausgehend von diesem inneren Bereich erstreckt sich der Klemmschlitz sodann in Seitenansicht bei montiertem Fahrradgriff schräg nach oben in Längsrichtung des Haltehorns über eine Länge von vorzugsweise 2 - 3 cm. Weiter ist es bevorzugt, dass sich der Klemmschlitz ausgehend von dem inneren, im Bereich des Lenkerrohres angeordneten Endes nach außen in Richtung des Endbereichs des Haltehorns verjüngt. Unabhängig von dieser Verjüngung ist es weiterhin bevorzugt, dass die Seitenflächen des Klemmschlitzes konvex aufeinander zu gekrümmt sind. Durch die bevorzugte erfindungsgemäße Ausgestaltung des Klemmschlitzes kann insbesondere ein geschlossener Klemmschlitz realisiert werden. Dies bedeutet, dass der Klemmschlitz in der Seitenansicht begrenzt ist und es sich nicht wie bei einem üblichen Klemmschlitz um einen Einschnitt handelt.

Die Ausgestaltung eines derartigen Klemmmittels mit einem insbesondere in Seitenansicht geschlossenen Klemmschlitz, wie vorstehend beschrieben, stellt eine selbstständige Erfindung dar, die insbesondere davon unabhängig ist, ob es sich um einen einstückigen Fahrradgriff aus Hauptgreifelement und Haltehorn handelt. Eine derartige Klemmung kann beispielsweise auch bei einem Haltehorn vorgesehen werden, das unabhängig vom Fahrradgriff selbst am Lenker montiert wird oder bei dem auf andere Weise eine Verbindung zwischen dem Haltehorn und dem Fahrradgriff realisiert ist. Bei einer derartigen Ausführungsform ist das Klemmmittel, bei dem es sich insbesondere um eine Schraube handelt, seitlich neben einem hülsenförmigen bzw. einer kreisringförmigen Öffnung angeordnet, die auf das Lenkerende aufgesteckt wird. Das Klemmmittel kann auf der dem Benutzer zugewandten Seite, d. h. bezogen auf das Haltehorn, auf einer hinsichtlich des Lenkers gegenüberliegenden Seite vorgesehen sein. Ebenso ist es möglich, das Klemmmittel auf derselben Seite wie das Haltehorn vorzusehen, so dass das Klemmmittel in das Haltehorn integriert ist und vorzugsweise im montierten Zustand nahe am Lenker angeordnet ist.

Die Integration des Klemmmittels, insbesondere der Mutter, in den Fahrradgriff oder einen unabhängig von einem Fahrradgriff an einem Lenker fixierbaren Haltehorn, stellt eine selbstständige Erfindung dar, die von der Winkelstellung des Haltehorns unabhängig ist. Die integrierte Klemmung hat insbesondere den Vorteil, dass keine Metallschelle oder dergleichen verwendet werden muss. Vielmehr kann es sich um einen vollständig aus Kunststoff hergestellten Fahrradgriff bzw. ein vollständig aus Kunststoff hergestelltes Haltehorn handeln, wobei das einzige Metallteil die eingegossene Mutter und die Klemmschraube ist. Hierbei ist es bevorzugt, dass die Mutter von einem härteren, einen Kern des Haltehorns und/oder des Fahrradgriffs bildenden Kunststoff vollständig umschlossen ist. Der härtere Kunststoff ist insbesondere ebenfalls vollständig von einem Kunststoffelement aus weicherem Material umgeben bzw. umspritzt.

Nachfolgend wird die Erfindung anhand bevorzugter Ausführungsformen unter Bezugnahme auf die Zeichnungen näher erläutert.

Es zeigen:
- Fig. 1: eine schematische Draufsicht eines erfindungsgemäßen Fahrradgriffs,
- Fig. 2: eine schematische Seitenansicht in Richtung des Pfeils II in Fig. 1,
- Fig. 3: eine schematische Draufsicht des inneren Aufbaus des in Fig. 1 dargestellten Fahrradgriffs bei einer weiteren bevorzugten Ausführungsform, und
- Fig. 4: eine schematische Seitenansicht des Fahrradgriffs einer weiteren bevorzugten Ausführungsform.

Der erfindungsgemäße Fahrradgriff, bei dem es sich insbesondere um einen Fahrradgriff für Trekkingräder und Mountainbikes handelt, weist ein Hauptgreifelement 10 auf. Das Hauptgreifelement 10 ist im dargestellten Ausführungsbeispiel einstückig mit einem Ansatz 12 verbunden, der zur Auflage des Handballens dient. Der Ansatz 12 weist somit in Richtung des Fahrradfahrers bzw. entgegen einer Fahrtrichtung 14. Ferner ist mit dem Hauptgreifelement 10 einstückig ein Haltehorn 16 verbunden. Das Haltehorn 16 weist in Fahrtrichtung 14 und dient zum Greifen des Fahrradgriffs in einer anderen Greifposition, in der das Handgelenk gegenüber der herkömmlichen Greifposition um etwa 90° gedreht ist.

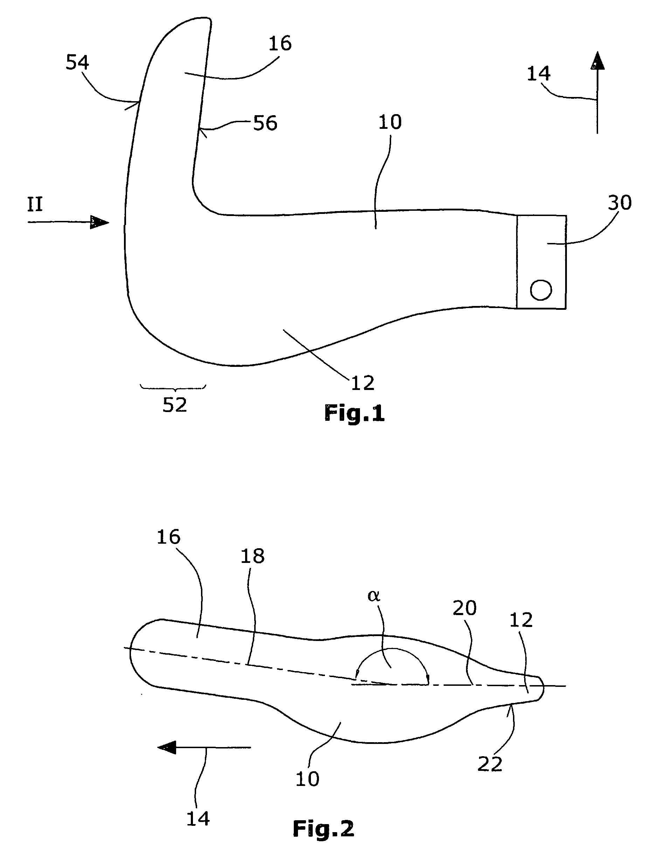

In montiertem Zustand ist der mit dem Hauptgreifelement 10 verbundene Ansatz 12 im Wesentlichen horizontal ausgerichtet (Fig. 2). Da das Haltehorn 16 einstückig mit dem Hauptgreifelement 10 verbunden ist, ist somit auch die Lage des Haltehorns 16 definiert. Das Haltehorn 16 weist, wie aus Fig. 2 ersichtlich ist, schräg nach oben in Fahrtrichtung 14. Eine Mittellinie 18 des Haltehorns 16 weist somit gegenüber einer Horizontalen 20 im Wesentlichen parallel verlaufenden Handballen-Auflagenfläche 22 einen Winkel α auf. Der Winkel α liegt im Bereich zwischen 160° und 120°. Durch diese Ausgestaltung ist ein leichter und kostengünstiger Fahrradgriff realisiert, bei dem ferner sichergestellt ist, dass dieser auf einfache Weise in der richtigen Lage montiert werden kann. Hier ist es schließlich erforderlich, die Handballen-Auflagefläche 22 im Wesentlichen horizontal auszurichten. Die Ausrichtung des Haltehorns ist auch in der einstückigen Ausgestaltung automatisch definiert und stets ergonomisch angeordnet.

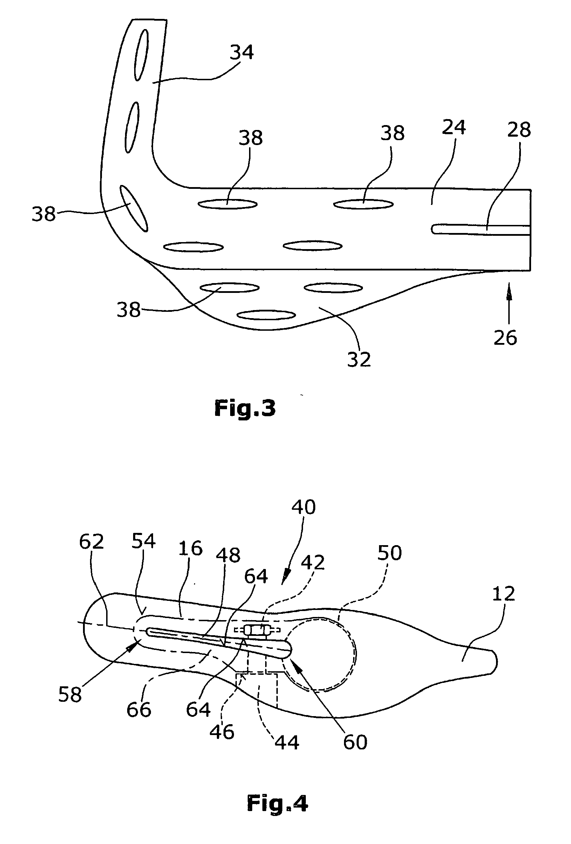

Zur Verbesserung der Stabilität und der Vereinfachung der Montierbarkeit weist der Fahrradgriff in einer besonders bevorzugten Ausführungsform innenliegende Versteifungselemente auf (Fig. 3). Hierbei ist innerhalb des Hauptgreifelements 10 eine Hülse 24 vorgesehen. Diese insbesondere aus härterem Material hergestellte im Wesentlichen zylindrische Hülse weist einen Innendurchmesser auf, der im Wesentlichen dem Außendurchmesser des Lenkerrohrs entspricht. In einem innenliegenden in Fig. 3 rechten Bereich 26 weist die Hülse einen Schlitz 28 auf. Ebenso ist es möglich, dass mehrere am Umfang verteilt angeordnete Schlitze vorgesehen sind. In dem Bereich 26 wird ein schellenartiges Klemmelement 30 (Fig. 1) angeordnet. Durch Anziehen einer Schraube o.dgl. wird der Innendurchmesser des Klemmelements verringert. Hierdurch erfolgt ebenfalls ein Verringern des Innendurchmessers der Hülse in dem Bereich 26 (Fig. 3) und somit ein klemmendes Befestigen der Hülse 24 auf dem Lenkerrohr. Zur Ausgestaltung des Hauptgreifelements ist die Hülse mit einem insbesondere weicheren Material umgeben insbesondere umspritzt.

Innerhalb des flügelförmigen Ansatzes 12 ist ein skelettartiges Trägerelement 32 angeordnet. Dieses ist zur Ausgestaltung des flügelförmigen Ansatzes 12 wiederum mit Kunststoff ummantelt bzw. umspritzt.

Um auch einerseits eine steife Ausgestaltung des Haltehorns 16 realisieren zu können und andererseits eine weiche Ummantelung von der Außenseite vorsehen zu können, weist auch das Haltehorn 16 ein skelettartiges Trägerelement 34 auf, das im dargestellten Ausführungsbeispiel im Wesentlichen rohrförmig ausgebildet ist.

Besonders bevorzugt ist es, dass die Hülse 24 und beide skelettartigen Trägerelemente 32,34 einstückig aus demselben Material hergestellt sind. Auch die anschließende Ummantelung mit einem weicheren Material erfolgt vorzugsweise gemeinsam, so dass keine Materialübergänge entstehen.

Ferner können die Hülse 24 sowie auch die beiden Trägerelemente 32,34 Durchgangöffnungen 38 aufweisen. In die Durchgangsöffnungen 38 dringt Material der Ummantelung während des Spritzgießens. Hierdurch ist ein sicheres Verbinden der Ummantelung mit der Hülse 24 sowie den Trägerelementen 32,34 sichergestellt.

Bei einer erfindungsgemäßen Ausführungsform (Figur 4) ist anstelle oder zusätzlich zu dem Klemmmittel 30 ein integriertes Klemmmittel 40 vorgesehen sein. Das Klemmmittel 40 umfasst eine Mutter 42, die in den Fahrradgriff eingespritzt ist sowie eine nicht dargestellte, in eine Öffnung 44 einführbare Klemmschraube, die in die Mutter 42 eingreift. Der Kopf der Klemmschraube liegt an einem Absatz 46 der Öffnung 44 an, so dass durch Anziehen der Klemmschraube ein Verklemmen des Fahrradgriffs möglich ist. Hierzu ist ein Schlitz 48 vorgesehen, der sich in der in Figur 4 dargestellten Seitenansicht nach innen, d. h. senkrecht zur Zeichenebene, erstreckt. Durch Anziehen der Klemmschraube erfolgt somit ein Verringern eines zylindrischen Innendurchmessers 50 der Schraube und somit ein klemmendes Befestigen des Fahrradgriffs auf dem Lenkerrohr.

Das Klemmmittel 40 ist in einem Übergangsbereich 52 (Figur 1) angeordnet. Der Klemmschlitz 48 erstreckt sich ausgehend von einer Außenseite 54 nach innen, d. h. in Figur 1 nach rechts, wobei sich der Schlitz 48 in bevorzugter Ausführungsform nicht bis zu einer Innenseite 56 des Haltehorns 16 erstreckt, so dass die Innenseite 56 des Haltehorns 16 geschlossen ist.

Eine Besonderheit der Ausgestaltung des Schlitzes 48 besteht darin, dass es sich um einen geschlossenen Schlitz handelt. Die einzige Öffnung des Schlitzes 48 weist in Richtung der Außenseite 54. Die beiden Endbereiche 58, 60 des sich in Längsrichtung 62 des Haltehorns 16 erstreckenden Schlitzes 48 sind geschlossen und insbesondere abgerundet. Vorzugsweise ist der Schlitz 48 im Wesentlichen keilförmig bzw. sich verjüngend, ausgehend von dem inneren Ende 60 in Richtung des äußeren Endes 58 ausgebildet. Bei der dargestellten, besonders bevorzugten Ausführungsform sind die Seitenflächen 64 des Schlitzes 48 konvex nach innen aufeinander zu gekrümmt. Hierdurch kann eine bessere Verformung realisiert werden.

Die Mutter 42 ist vorzugsweise durch ein mit dem Trägerelement 34 verbundenen Element 66 umspritzt. Insbesondere ist das Element 66 einstückig mit dem Trägerelement 34 vorzugsweise aus demselben Material, wie einem harten Kunststoff, ausgebildet. Das Element 66 bzw. das Trägerelement 34 ist hierbei derart ausgebildet, dass der Schlitz 48 vollständig von dem Trägerelement 34 bzw. dem Element 66 umgeben ist. Ferner ist das Element 66 in bevorzugter Ausführungsform derart ausgestaltet, dass ein Absatz 46, an dem die Innenseite des Kopfs der Klemmschraube anliegt, ebenfalls durch dasselbe harte Kunststoffmaterial ausgebildet ist.

Die besondere Ausgestaltung des Klemmelements 40 kann auch in Kombination mit einem skelettartigen Innenaufbau des Fahrradgriffs, wie in Figur 3 dargestellt, erfolgen.

## Patentansprüche

1. Fahrradgriff, insbesondere für Trekkingräder und Mountainbikes, mit
- einem auf ein Lenkerrohr aufsteckbaren Hauptgreifelement (10),
- einem mit dem Hauptgreifelement (10) verbundenen flügelförmigen Ansatz (12), der im montiertem Zustand entgegen einer Fahrtrichtung (14) weist und eine Handballen-Auflagefläche (22) ausbildet und
- einem einstückig mit dem Hauptgreifelement (10) ausgebildeten Haltehorn (16),
**dadurch gekennzeichnet,**
**dass** der flügelförmige Ansatz (12), der die Handballen-Auflagefläche (22) ausbildet, zu einer Mittellinie (18) des Haltehorns (16) einen Winkel α von 160° bis 120° aufweist, ein in einem Übergangsbereich (52) zwischen dem Hauptgreifelement (10) und dem Haltehorn (16) angeordnetes Klemmelement (40) und ein sich von einer Außenseite (54) des Haltehorns (16) nach innen erstreckender Klemmschlitz (48) vorgesehen ist.

2. Fahrradgriff nach Anspruch 1, **dadurch gekennzeichnet, dass** die Handauflagefläche (22) im montierten Zustand im Wesentlichen horizontal und das Haltehorn (16) ausgehend vom Hauptgreifelement (10) steigend angeordnet ist.

3. Fahrradgriff nach Anspruch 1 oder 2, **dadurch gekennzeichnet, dass** das Hauptgreifelement (10) und der Ansatz (12) einstückig ausgebildet sind.

4. Fahrradgriff, nach einem der Ansprüche 1 bis 3, **dadurch gekennzeichnet, dass** zwischen dem Hauptgreifelement (10), dem Ansatz (12) und dem Haltehorn (16) stufenfreie Übergänge vorgesehen sind.

5. Fahrradgriff, nach einem der Ansprüche 1 bis 4, **dadurch gekennzeichnet, dass** das Hauptgreifelement (10) eine innere zylindrische Hülse (24) aus hartem Material aufweist, die von einem Überzug aus weichem Material umgeben ist.

6. Fahrradgriff, nach einem der Ansprüche 1 bis 5, **dadurch gekennzeichnet, dass** innerhalb des Ansatzes (12) ein skelettartiges Trägerelement (32) angeordnet ist, das vorzugsweise mit der Hülse (24) verbunden insbesondere einstückig ausgebildet ist.

7. Fahrradgriff, nach einem der Ansprüche 1 bis 6, **dadurch gekennzeichnet, dass** innerhalb des Haltehorns (16) ein skelettartiges Trägerelement (34) angeordnet ist, das vorzugsweise mit der Hülse (24) verbunden insbesondere einstückig ausgebildet ist.

8. Fahrradgriff, nach einem der Ansprüche 1 bis 7, **gekennzeichnet durch** ein insbesondere mit dem Hauptgreifelement (10) verbundenes Klemmelement (30) zum klemmenden Befestigen des Fahrradgriffs auf dem Lenkerrohr, wobei das Klemmelement (30) vorzugsweise auf einen geschlitzten Bereich der Hülse (24) einwirkt.

9. Fahrradgriff, nach einem der Ansprüche 1 bis 8, **dadurch gekennzeichnet, dass** das Klemmelement (40) in einem Übergangsbereich (52) zwischen dem Hauptgreifelement (10) und dem Haltehorn (16) integriert angeordnet ist.

10. Fahrradgriff, nach einem der Ansprüche 1 bis 9, **dadurch gekennzeichnet, dass** das Klemmelement (40) eine innerhalb des Hauptgreifelements (10) und/oder des Haltehorns (16) angeordnete Mutter (42) sowie eine Öffnung (44) zur Aufnahme einer Klemmschraube aufweist.

11. Fahrradgriff, nach Anspruch 10, **dadurch gekennzeichnet, dass** die Klemmschraube im Wesentlichen senkrecht zu dem Klemmschlitz (48) verläuft.

12. Fahrradgriff, nach Anspruch 11, **dadurch gekennzeichnet, dass** sich der Klemmschlitz (48) in Längsrichtung (62) des Haltehorns (16) erstreckt.

13. Fahrradgriff, nach Anspruch 11 oder 12, **dadurch gekennzeichnet, dass** der Klemmschlitz (48) konvex aufeinander zu gekrümmte Seitenflächen (64) aufweist und/oder sich von einem inneren Bereich (60) in Richtung eines Endbereichs (58) verjüngt.

## Claims

1. A bicycle handle, in particular for trekking bicycles and mountain bikes, comprising
- a main grip element (10) adapted to be slipped onto a handlebar,
- a wing-shaped protrusion (12) connected to the main grip element (10), the former, in the mounted state, being directed in a direction opposite to the traveling direction (14) and forming a support surface (22) for the ball of the thumb, and
- a barend (16) formed integrally with the main grip element (10),
**characterized in that**
the wing-shaped protrusion (12), which forms the support surface (22) for the ball of the thumb, forms an angle a of 160° to 120° with respect to a centerline (18) of the barend (16), a clamping element (40) is provided that is arranged in a transition region (52) between the main grip element (10) and the barend (16), and a clamping slot (48) is provided that extends inwards from an outer side (54) of the barend (16).

2. The bicycle handle of claim 1, **characterized in that**, when mounted, the support surface (22) for the ball of the thumb is arranged substantially horizontally and the barend (16) rises starting from the main grip element (10)

3. The bicycle handle of claim 1 or 2, **characterized in that** the main grip element (10) and the protrusion (12) are formed integrally.

4. The bicycle handle of one of claims 1 to 3, **characterized in that** smooth transitions are provided between the main grip element (10), the protrusion (12) and the barend (16).

5. The bicycle handle of one of claims 1 to 4, **characterized in that** the main grip element (10) comprises an inner cylindrical sleeve (24) of a hard material enclosed by a cover of a soft material.

6. The bicycle handle of one of claims 1 to 5, **characterized in that** a skeletonlike support element (32) is arranged inside the protrusion (12), which element is preferably connected, in particular formed integrally, with the sleeve (24).

7. The bicycle handle of one of claims 1 to 6, **characterized in that** a skeletonlike support element (34) is arranged inside the barend (16), which element is preferably connected, in particular formed integrally, with the sleeve (24).

8. The bicycle handle of one of claims 1 to 7, **characterized by** a clamping element (30), connected in particular with the main grip element (10), for mounting the bicycle handle to the handlebar by clamping, the clamping element (30) preferably acting on a slotted region of the sleeve (24).

9. The bicycle handle of one of claims 1 to 8, **characterized in that** the clamping element (40) is integrally arranged in a transition region (52) between the main grip element (10) and the barend (16).

10. The bicycle handle of one of claims 1 to 9, **characterized in that** the clamping element (40) comprises a nut (42) arranged inside the main grip element (10) and/or the barend (16), as well as an opening (44) for receiving a clamping screw.

11. The bicycle handle of claim 10, **characterized in that** the clamping screw extends substantially perpendicularly to the clamping slot (48).

12. The bicycle handle of claim 11, **characterized in that** the clamping slot (48) extends in the longitudinal direction (62) of the barend (16).

13. The bicycle handle of claim 11 or 12, **characterized in that** the clamping slot (48) has side surfaces (64) curved convexly towards each other and/or tapers from an inner region (60) towards an end region (58).

## Revendications

1. Poignée de vélo, en particulier pour vélos de randonnée et VTT, comportant
- un élément de préhension principal (10) pouvant s'emboîter sur un tube de direction,
- une rallonge (12) en forme d'ailette, reliée à l'élément de préhension principal (10), et qui à l'état monté est dirigée dans une direction opposée au sens de la marche (14) et forme une surface d'appui (22) pour l'éminence thénar, et,
- une corne de maintien (16), configurée en une seule pièce avec l'élément de préhension principal (10),
**caractérisée en ce que** la rallonge (12) en forme d'ailette, qui forme la surface d'appui (22) pour l'éminence thénar, fait avec un axe central (18) de la corne de maintien (16) un angle a de 160 à 120°, un élément de serrage (40), disposé dans une zone de transition (52) entre l'élément de préhension principal (10) et la corne de maintien (16), ainsi qu'une fente de serrage (48), s'étendant vers l'intérieur à partir d'une face extérieure (54) de la corne de maintien (16), étant prévus.

2. Poignée de vélo selon la revendication 1, **caractérisée en ce que** la surface de préhension principale (22) est à l'état monté disposée d'une manière essentiellement horizontale, et **en ce que** la corne de maintien (16) est disposée en faisant une pente montante à partir de l'élément de préhension principal (10).

3. Poignée de vélo selon la revendication 1 ou 2, **caractérisée en ce que** l'élément de préhension principal (10) et la rallonge (12) sont configurés en une seule pièce.

4. Poignée de vélo selon l'une des revendications 1 à 3, **caractérisée en ce que** des transitions continues sont prévues entre l'élément de préhension principal (10), la rallonge (12) et la corne de maintien (16).

5. Poignée de vélo selon l'une des revendications 1 à 4, **caractérisée en ce que** l'élément de préhension principal (10) comprend un manchon cylindrique intérieur (24) en un matériau dur, qui est entouré d'un revêtement en un matériau mou.

6. Poignée de vélo selon l'une des revendications 1 à 5, **caractérisée en ce qu'**à l'intérieur de la rallonge (12) est disposé un élément formant support (32) de type ossature, qui est de préférence configuré relié au manchon (24), en particulier en formant une seule pièce.

7. Poignée de vélo selon l'une des revendications 1 à 6, **caractérisée en ce qu'**à l'intérieur de la corne de maintien (16) est disposé un élément formant support (34) de type ossature, qui est de préférence configuré relié au manchon (24), en particulier en formant une seule pièce.

8. Poignée de vélo selon l'une des revendications 1 à 7, **caractérisée par** un élément de serrage (30), relié en particulier à l'élément de préhension principal (10), pour fixer par serrage la poignée du vélo au tube de direction, l'élément de serrage (30) agissant de préférence sur une zone fendue du manchon (24).

9. Poignée de vélo selon l'une des revendications 1 à 8, **caractérisée en ce que** l'élément de serrage (40) est disposé en étant intégré dans une zone de transition (52) entre l'élément de préhension principal (10) et la corne de maintien (16).

10. Poignée de vélo selon l'une des revendications 1 à 9, **caractérisée en ce que** l'élément de serrage (40) comprend un écrou (42), disposé à l'intérieur de l'élément de préhension principal (10) et/ou de la corne de maintien (16), ainsi qu'une ouverture (44) pour recevoir une vis de serrage.

11. Poignée de vélo selon la revendication 10, **caractérisée en ce que** la vis de serrage s'étend essentiellement perpendiculairement à la fente de serrage (48).

12. Poignée de vélo selon la revendication 11, **caractérisée en ce que** la fente de serrage (48) s'étend dans la direction longitudinale (62) de la corne de maintien (16).

13. Poignée de vélo selon la revendication 11 ou 12, **caractérisée en ce que** la fente de serrage (48) présente des surfaces latérales (64) incurvées l'une vers l'autre d'une manière convexe, et/ou se rétrécit à partir d'une zone intérieure (60), dans la direction d'une zone terminale (58).
